# EUROPEAN PATENT APPLICATION

(11) **EP 4 822 306 A1**
(43) Date of publication of application: **14.10.2026**
(21) Application number: 24900268.4
(22) Date of filing: 02.10.2024
(51) Int. Cl.: G01F 23/284

(54) **REMAINING AMOUNT ESTIMATION SYSTEM**

(30) Priority: 06.12.2023 JP 2023206199
(71) Applicant: HOSIDEN CORPORATION, Yao-shi, Osaka 581-0071 (JP)
(72) Inventor: TOYOTA Naoki, Yao-shi, Osaka 581-0071 (JP); ISODA Takeshi, Yao-shi, Osaka 581-0071 (JP)
(74) Representative: LBP Lemcke, Brommer & Partner Patentanwälte mbB
(86) International application number: PCT/JP2024/035190
(87) International publication number: WO 2025/120971

(57) **Abstract**

A remaining amount estimation system is a remaining amount estimation system for estimating a remaining amount of a material (C) contained in a container on which the remaining amount estimation system is mounted. The remaining amount estimation system includes: a sensor unit (6) configured to measure a distance (df) to the contained material (C) by measuring time from transmission of a radio wave until reception of the radio wave reflected from a surface (F) of the contained material (C) and to output measurement result information indicating at least the measured distance; and a remaining amount estimation unit configured to estimate the remaining amount based on the measurement result information, but with no use of a measured distance equal to or less than a first allowable threshold (dl) set in advance in accordance with specifications of the sensor unit (6) and/or the container (T), from among measured distances indicated by the measurement result information.

## Description

### Technical Field

This disclosure relates to a remaining amount estimation system.

### Background Art

Patent Literature 1 discloses a stock level notification system for managing the remaining amount of kerosene stored in households and the like. The stock level notification system disclosed in Patent Literature 1 includes: a stock level detecting unit such as a pressure sensor; a transmission terminal configured to transmit data on the remaining amount of kerosene, detected by the stock level detecting unit, via wireless communication or the like; a receiving terminal configured to receive the data on the remaining amount of kerosene, transmitted from the transmission terminal; and a stock level management device configured to store the data on the remaining amount, received from the receiving terminal, and notify the remaining amount of kerosene.

Patent Literature 2 discloses a stock level estimating method for estimating the stock level in a storage tank that stores a solid, a liquid, or a mixture thereof, from an indicated value obtained from a level gauge such as an ultrasonic sensor. The stock level estimating method disclosed in Patent Literature 2 includes: a first step of obtaining the relationship between the indicated value of the level gauge and the stock level in an actual storage tank by performing model experiments in accordance with the scale of a scaled model of the storage tank; a second step of measuring the deposit height of a stored material in the actual storage tank by using the level gauge; and a third step of estimating the stock level of the actual storage tank from the obtained indicated value of the level gauge in the actual storage tank and the relationship between the indicated value of the level gauge and the stock level in the actual storage tank which relationship is obtained by the model experiments.

### Citation List

### Patent Literature

Patent Literature 1: Japanese Unexamined Patent Application Publication No. 2012-86941
Patent Literature 2: Japanese Unexamined Patent Application Publication No. 2019-158854

### Summary of Invention

### Technical Problem

The technologies disclosed in Patent Literature 1 and Patent Literature 2, a sensor is used to estimate the remaining amount of a material contained in a container (kerosene in Patent Literature 1, and the stored material in Patent Literature 2). Some sensors may not be able to perform accurate detection in a given region due to their sensitivity characteristics or the like. Depending on the sensor used, issues may arise in which the remaining amount of the contained material cannot be accurately estimated.

In view of this, a remaining amount estimation system capable of more accurately estimating the remaining amount of the contained material is demanded.

### Solution to Problem

A characteristic configuration of a remaining amount estimation system according to this disclosure is as follows. That is, the remaining amount estimation system is a remaining amount estimation system for estimating a remaining amount of a material contained in a container on which the remaining amount estimation system is mounted, and includes: a sensor unit configured to measure a distance to the contained material by measuring time from transmission of a radio wave until reception of the radio wave reflected from a surface of the contained material and to output measurement result information indicating at least the measured distance; and a remaining amount estimation unit configured to estimate the remaining amount based on the measurement result information, but with no use of a measured distance equal to or less than a first allowable threshold set in advance in accordance with specifications of the sensor unit and/or the container, from among measured distances indicated by the measurement result information.

With such a characteristic configuration, the remaining amount is estimated with no use of a measured distance that is equal to or less than the first allowable threshold set in advance in accordance with the specifications of the sensor unit (for example, a region where accurate measurement cannot be performed due to sensitivity characteristics of the sensor unit or the like), and the specifications of the container (for example, a region where accurate measurement cannot be performed due to the specifications such as the size of the container or the shape of the container). Accordingly, the remaining amount of the contained material can be estimated more accurately.

The remaining amount estimation unit may determine whether or not the measured distance is greater than a second allowable threshold set in advance based on a bottom-surface distance indicating a distance between the sensor unit and a bottom surface of the container, and in response to determining that the measured distance is greater than the second allowable threshold, the remaining amount estimation unit may estimate that the remaining amount of the contained material is full.

In a case where a material having a relative permittivity greater than that of air is contained in the container, a measured distance to the bottom surface, indicated by the measurement result information output from the sensor unit, is greater than an actual bottom-surface distance, and a value greater than the second allowable threshold is output as the measured distance. By utilizing such a phenomenon, it is possible to determine that the remaining amount of the contained material is full when the measured distance is greater than the second allowable threshold set in advance based on the bottom-surface distance, thereby making it possible to estimate the remaining amount of the contained material more accurately.

In response to determining that the measured distance is equal to or less than the first allowable threshold, the remaining amount estimation unit may estimate that the remaining amount of the contained material is full.

With such a configuration, even in a case where a reflected wave reflected from the bottom surface is attenuated due to the size of the contained material or the type of the contained material and is not received by the sensor unit or not detected by the sensor unit (the reflected wave is determined not to be received), the remaining amount of the contained material can be determined to be full, thereby making it possible to estimate the remaining amount of the contained material more accurately.

In response to determining that the measured distance is equal to or less than the second allowable threshold, the remaining amount estimation unit may determine whether or not the measured distance is within an allowable range set in advance relative to the bottom-surface distance, and in response to determining that the measured distance is within the allowable range, the remaining amount estimation unit may estimate that the remaining amount of the contained material is empty.

With such a configuration, the remaining amount can be estimated to be empty by determining whether or not the measured distance is within the allowable range set in advance relative to the bottom-surface distance, thereby making it possible to estimate the remaining amount of the contained material more accurately.

In response to determining that the measured distance is out of the allowable range, the remaining amount estimation unit may estimate the remaining amount based on the measured distance.

With such a configuration, the contained material is obtained by calculation in a case where the contained material is neither full nor empty, thereby making it possible to estimate the remaining amount of the contained material more accurately.

The bottom-surface distance may be the measurement result information acquired by the sensor unit while no material is contained in the container.

With such a configuration, a value obtained by actual measurement performed by the sensor unit mounted on the container can be set as the bottom-surface distance, thereby making it possible to estimate the remaining amount of the contained material more accurately.

The bottom-surface distance may be container specific information based on the specifications of the container.

With such a configuration, the bottom-surface distance can be set based on the specifications (catalog data or the like) of the container, so that the work required to mount the sensor unit on the container and acquire (measure) the bottom-surface distance is not required, thereby making it possible to avoid complication of the work.

The remaining amount estimation system may further include a memory unit capable of storing the container specific information.

With such a configuration, the work required to perform communication to acquire the container specific information from an external device that stores the container specific information is not required, for example, thereby making it possible to improve the responsiveness of the sensor unit.

The remaining amount estimation system may further include an input unit capable of receiving the container specific information.

With such a configuration, the work required to mount the sensor unit on the container and acquire (measure) the bottom-surface distance is not required, for example, thereby making it possible to avoid complication of the work.

The contained material may be an organic material.

With such a configuration, it is possible to estimate the remaining amount of various organic materials as the contained material.

### Brief Description of Drawings

Fig. 1 is a view schematically illustrating a remaining amount estimation system according to an embodiment;
Fig. 2 is a perspective view illustrating a configuration of a container and the remaining amount estimation device according to the embodiment;
Fig. 3 is a sectional view illustrating the remaining amount estimation device mounted on the container illustrated in Fig. 2;
Fig. 4 is an exploded perspective view of the remaining amount estimation device illustrated in Fig. 2;
Fig. 5 is an exploded perspective view of the remaining amount estimation device illustrated in Fig. 2;
Fig. 6A is a view illustrating an example of measurement result information according to the embodiment;
Fig. 6B is a view illustrating an example of the measurement result information according to the embodiment;
Fig. 6C is a view illustrating an example of the measurement result information according to the embodiment;
Fig. 7 is a graph illustrating an example of the relationship between the depth of a material contained in the container and the remaining amount thereof according to the embodiment;
Fig. 8 is a flowchart illustrating a remaining amount estimation process according to the embodiment; and
Fig. 9 is a view schematically illustrating a remaining amount estimation system according to an alternative embodiment.

### Description of Embodiments

The following describes a remaining amount estimation system including a remaining amount estimation device according to an embodiment of this disclosure. Note that the elements of the embodiment (described later) may be combined with each other as long as they are not mutually inconsistent. The materials, shapes, dimensions, numbers, arrangements, and the like of the elements in the embodiments described below are merely illustrative examples, and various design modifications may be made as long as the same functions can be achieved.

### [Remaining Amount Estimation System]

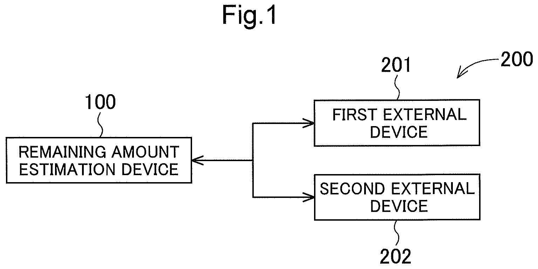

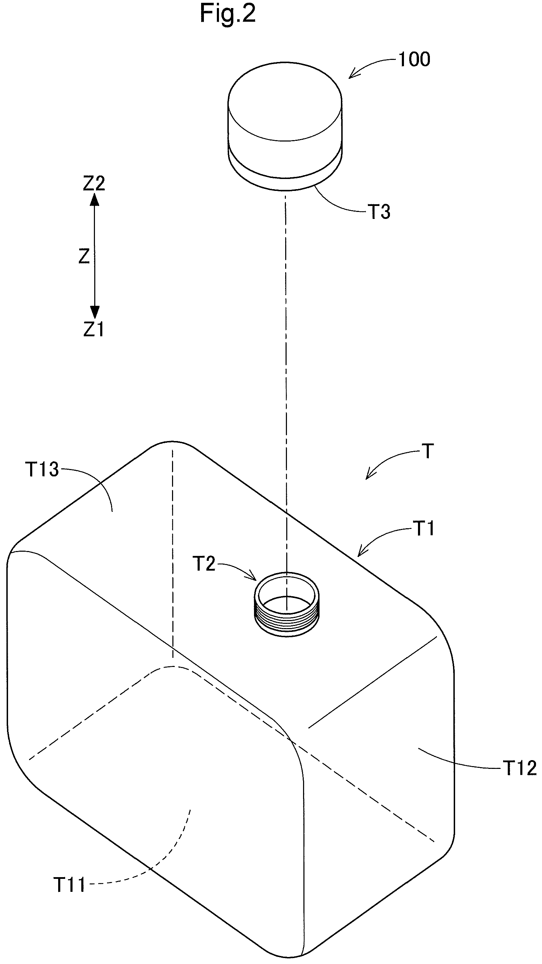

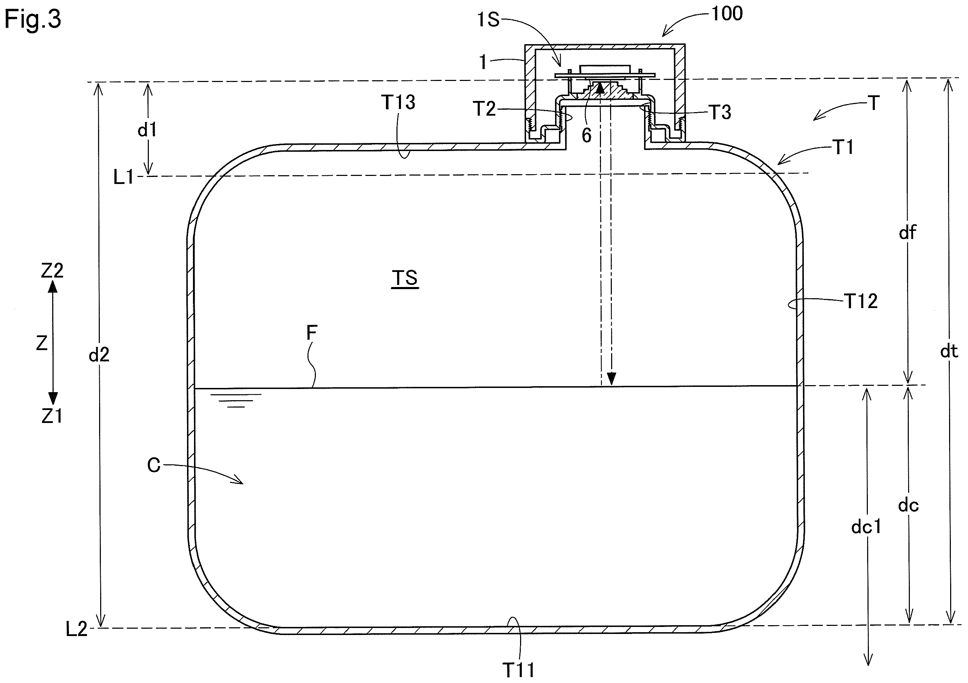

With reference to Figs. 1 to 3, a schematic configuration of a remaining amount estimation system 200 including a remaining amount estimation device 100 will be described. Fig. 1 is a view illustrating a schematic configuration of the remaining amount estimation system 200. Fig. 2 is a perspective view illustrating a configuration of a container T and the remaining amount estimation device 100, and Fig. 3 is a sectional view illustrating the remaining amount estimation device 100 mounted on the container T illustrated in Fig. 2.

As illustrated in Fig. 1, the remaining amount estimation system 200 includes a first external device 201 and a second external device 202 that are communicable with the remaining amount estimation device 100, in addition to the remaining amount estimation device 100 configured to estimate a remaining amount Ra of a material C (see Fig. 3) contained in the container T (see Fig. 2).

### [First External Device]

The first external device 201 is a monitoring device for monitoring, for example, the remaining amount Ra of the contained material C. The first external device 201 is capable of communicating with the remaining amount estimation device 100 in conformity with a long-range wireless standard corresponding to a first communication distance (1 km or more in the present embodiment). In the present embodiment, the first external device 201 is a server on a network, such as a cloud server provided by a telecommunications carrier or the like, and is capable of communicating with the remaining amount estimation device 100 via a base station.

### [Second External Device]

The second external device 202 is a maintenance management device for performing maintenance on the remaining amount estimation device 100, for example. The second external device 202 is capable of communicating with the remaining amount estimation device 100 in conformity with a short-range wireless standard corresponding to a second communication distance (up to 300 m in the present embodiment). In the present embodiment, the second external device 202 is an information processing terminal such as a portable telephone or a smartphone and is capable of communicating with the remaining amount estimation device 100 within a distance (range) in which the remaining amount estimation device 100 is visually observable.

### [Container]

As illustrated in Figs. 2, 3, the container T includes a container main body T1, an opening T2 having a cylindrical shape and projecting from the container main body T1, and a lid T3 configured to close the opening T2. In the present embodiment, the container T is a kerosene tank, and the contained material C is kerosene.

The container main body T1 has a bottom surface T11, lateral surfaces T12, and a top surface T13, and a storage space TS (see Fig. 3) that contains (stores) the contained material C is formed by the bottom surface T11, the lateral surfaces T12, and the top surface T13. The opening T2 allows the storage space TS to communicate with a space outside the container T. The opening T2 is disposed in the top surface T13 facing the bottom surface T11 of the container main body T1 and projects from the top surface T13 toward a direction away from the bottom surface T11 (a direction perpendicular to the top surface T13). The opening T2 has an aperture (an inner diameter) of 50 mm or more and 65 mm or less, for example, and has an area smaller than the top surface T13 as viewed in a direction perpendicular to the top surface T13. Note that the top surface T13 has an area of 5000 mm² or more and 7000 mm² or less, for example.

The material C is supplied to the storage space TS through the opening T2 and is contained in the storage space TS (stored in the storage space TS). The lid T3 is attachable to the opening T2, and the opening T2 is closed when the lid T3 is attached thereto. The lid T3 includes resin as a material, and the remaining amount estimation device 100 is mounted on the lid T3. That is, the remaining amount estimation device 100 is disposed to face the bottom surface T11 of the container main body T1.

Note that, in the following description, based on a state where the lid T3 on which the remaining amount estimation device 100 is mounted is attached to the opening T2, a direction from the remaining amount estimation device 100 toward the bottom surface T11 of the container main body T1 is defined as a "vertical direction Z," one side where the bottom surface T11 is disposed in the vertical direction Z is defined as a "lower side Z1," and the other side (a side where the remaining amount estimation device 100 is disposed) is defined as an "upper side Z2."

### [Remaining Amount Estimation Device]

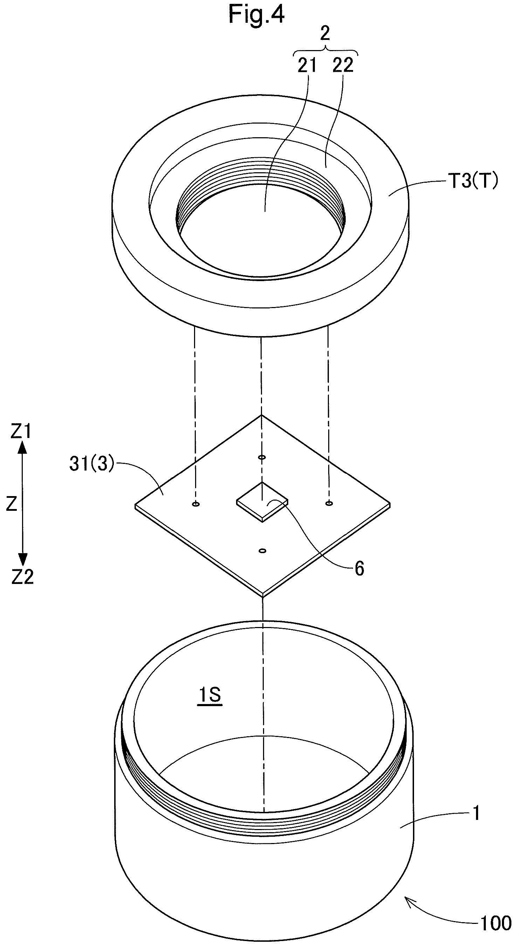

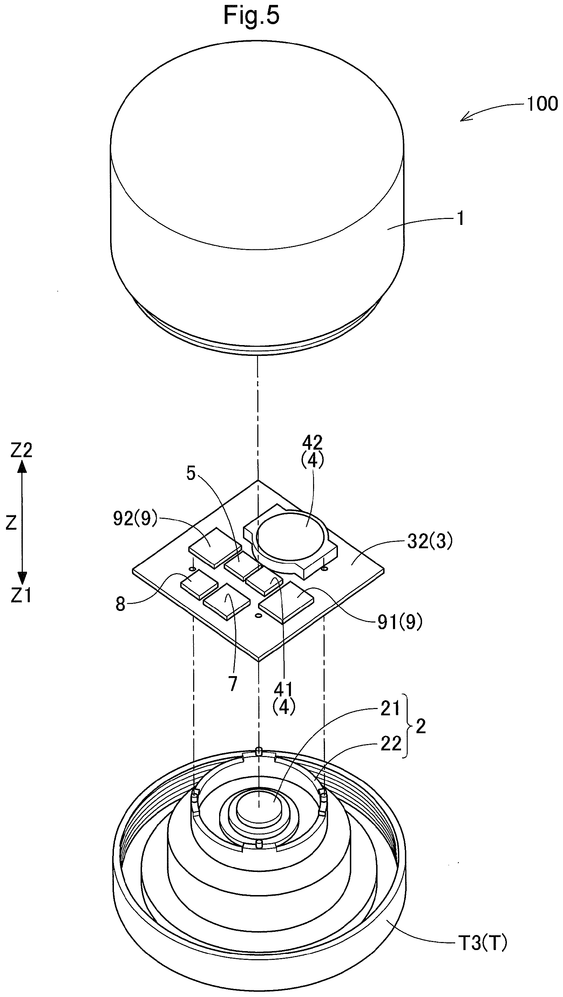

The remaining amount estimation device 100 estimates a remaining amount Ra of the material C contained in the container T. Figs. 4, 5 are exploded perspective views of the remaining amount estimation device 100.

As illustrated in Figs. 4, 5, the remaining amount estimation device 100 includes a housing 1, a lens unit 2, a substrate 3, a power supply unit 4 (see Fig. 5), a control unit 5 (see Fig. 5), a sensor unit 6 (see. Fig. 4), a memory unit 7 (see Fig. 5), a remaining amount estimation unit 8 (see Fig. 5), and a communication unit 9 (see Fig. 5). Note that the communication unit 9 is one example of an input unit.

### [Housing]

The housing 1 is electrically insulating and includes resin as a material. As illustrated in Fig. 3, the housing 1 is disposed to cover the lid T3 of the container T and held by the lid T3. The housing 1 and the lid T3 form a storage space 1S (see Fig. 4) that stores the lens unit 2, the substrate 3, the power supply unit 4, the control unit 5, the sensor unit 6, the memory unit 7, the remaining amount estimation unit 8, and the communication unit 9. In the present embodiment, the storage space 1S is watertight. A sealing material such as adhesive or grease is applied to a gap between the lid T3 and the housing 1, so that the storage space 1S is made watertight, for example.

### [Lens Unit]

The lens unit 2 illustrated in Figs. 4 and 5 improves the sensibility of the sensor unit 6. The lens unit 2 includes a lens 21 (convex lens) and a lens holder 22 configured to hold the lens 21. The lens 21 is a plastic lens made of resin as a material and is held by the lens holder 22 so as to face the sensor unit 6 with its container-T side bulging. In the present embodiment, the lens holder 22 is provided separately from the lid T3 and held by the lid T3 of the container T. Note that the lens holder 22 may be formed integrally with the lid T3.

### [Substrate]

The power supply unit 4, the control unit 5, the sensor unit 6, the memory unit 7, the remaining amount estimation unit 8, and the communication unit 9 are mounted on the substrate 3. In the present embodiment, the sensor unit 6 is disposed on a first surface 31 of the substrate 3 (see Fig. 4), and the power supply unit 4, the control unit 5, the memory unit 7, the remaining amount estimation unit 8, and the communication unit 9 are disposed on the second surface 32 of the substrate 3 (see Fig. 5). The substrate 3 is accommodated in the housing 1 with the surface (the first surface 31) of the substrate 3 on which the sensor unit 6 is disposed facing the lower side Z1, and is mounted on the lid T3 (see Fig. 3).

### [Power Supply Unit]

The power supply unit 4 supplies electric power to respective units of the remaining amount estimation device 100. The power supply unit 4 includes a power supply circuit 41 and a battery portion 42. The power supply circuit 41 performs conversion (DC-AC conversion and/or voltage conversion) on electric power from the battery portion 42 and supplies the electric power after conversion to respective units (the control unit 5, the sensor unit 6, the memory unit 7, the remaining amount estimation unit 8, and the communication unit 9) of the remaining amount estimation device 100. In the present embodiment, the battery portion 42 is a built-in primary battery, but the battery portion 42 may be a secondary battery or a combination of a self-power-generating device and a secondary battery.

### [Control Unit]

The control unit 5 is capable of controlling operations of the respective units of the remaining amount estimation device 100. The control unit 5 is capable of performing power-supply control on the power supply unit 4 and communication control on the communication unit 9. The control unit 5 is also capable of updating firmware of devices such as the sensor unit 6 and the communication unit 9. Note that the control unit 5 includes a microcontroller or the like equipped with a processor.

### [Sensor Unit]

The sensor unit 6 outputs estimation source information C1 used for estimating the remaining amount Ra of the material C contained in the container T. In the present embodiment, the sensor unit 6 is a range-finding sensor (a range-finding millimeter wave sensor) configured to measure a distance to a measurement target by using radio waves (millimeter waves). As illustrated in Fig. 3, the sensor unit 6 measures time from transmission of a radio wave from a transmission section of the sensor unit 6 until the radio wave reflected from a reflecting surface is received by a reception section (light-receiving element) of the sensor unit 6. That is, the sensor unit 6 is a ToF (Time-of-Flight) type level sensor and is capable of measuring a distance to the contained material C without contacting the contained material C. Note that the transmission and reception efficiency of radio waves in the sensor unit 6 is improved by the radio waves passing through the lens 21 of the lens unit 2.

The reflecting surface includes a boundary surface F of the contained material C (the liquid surface of kerosene in the present embodiment), the bottom surface T11 of the container T, a wall surface forming the opening T2 in the container T, and the like. In the present embodiment, the contained material C has a relative permittivity εr of "2," which is greater than the relative permittivity εr of air, "1 (approximately 1)." That is, the relative permittivity εr changes across the boundary surface F of the contained material C. Note that it is preferable that the gas (air) present between the sensor unit 6 and the boundary surface F contain no water vapor.

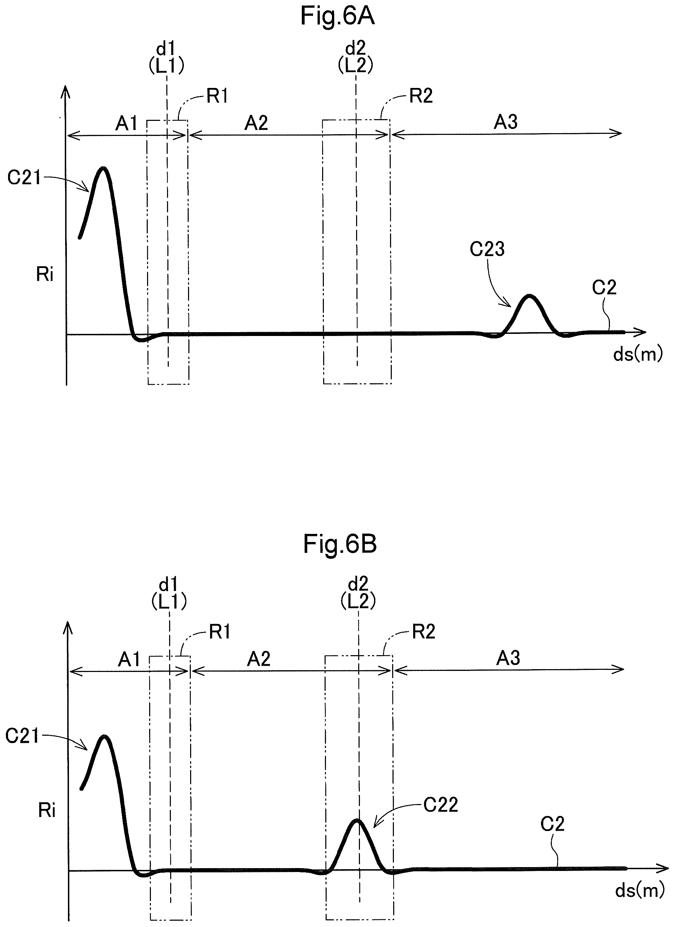

The sensor unit 6 outputs measurement result information C2 (see Figs. 6A to 6C) indicating the distance to the measurement target based on measured time.

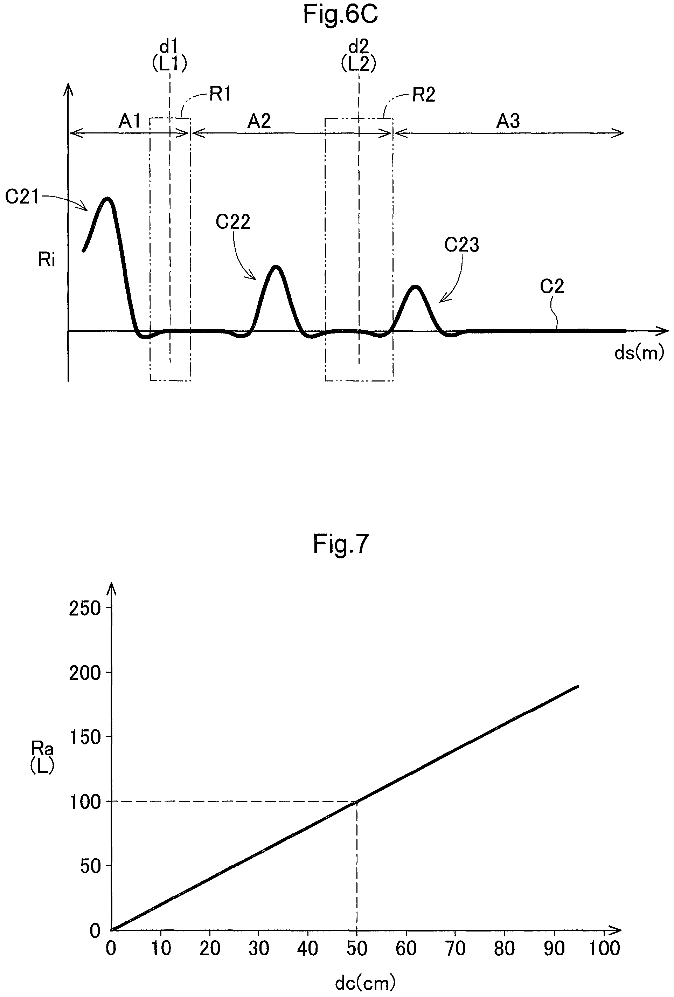

Figs. 6A to 6C are views each illustrating an example of the measurement result information C2 output from the sensor unit 6. In each of Figs. 6A to 6C, the vertical axis indicates a reflection intensity Ri of the radio waves transmitted from the sensor unit 6, and the horizontal axis indicates a measured distance ds between the sensor unit 6 and the reflecting surface. Fig. 6A illustrates an example of the measurement result information C2 output from the sensor unit 6 when the remaining amount Ra of the contained material C is estimated to be full. Fig. 6B illustrates an example of the measurement result information C2 output from the sensor unit 6 when the remaining amount Ra of the contained material C is estimated to be empty. Fig. 6C illustrates an example of the measurement result information C2 output from the sensor unit 6 when the remaining amount Ra of the contained material C is estimated to be a specific amount that is neither full nor empty. Note that "full" refers to the remaining amount Ra of the material C contained in the storage space TS in a case where the volume of the contained material C is equal to the storable capacity of the container T (hereinafter referred to as the "storable capacity"), for example. "Empty" refers to the remaining amount Ra of the material C contained in the storage space TS in a case where the volume of the contained material C is "0," for example. Note that the volume of the contained material C when the remaining amount Ra is estimated to be full, and the volume of the contained material C when the remaining amount Ra is estimated to be empty can be adjusted by an operator or the like of the remaining amount estimation device 100, and an allowable range (described later) can also be set. Note that, in a case where the remaining amount Ra of the contained material C corresponds to the storable capacity, it is preferable that the full state of the contained material C be set such that an air region of several centimeters is interposed between the lid T3 and the contained material C.

As illustrated in Figs. 6A to 6C, in the present embodiment, two thresholds (a first threshold d1 and a second threshold d2) are set for the measured distance ds (the distance between the sensor unit 6 and the reflecting surface from which the radio wave is reflected) indicated by the measurement result information C2 output from the sensor unit 6.

### [First Threshold]

The first threshold d1 is a threshold set in advance in accordance with the specifications of the sensor unit 6 and/or the container T. More specifically, the first threshold d1 is set by the operator or the like in advance based on the sensitivity characteristics of the sensor unit 6 (a distance from the sensor unit 6 at which the distance measurement performed by the sensor unit 6 becomes unstable), the shape of the container T (for example, the shape of the opening T2), the size of the container T (for example, the size of the opening T2), and the like. In the present embodiment, as the first threshold d1, the distance between a first division line L1 illustrated in Fig. 3 and the sensor unit 6 is set in consideration of the sensitivity characteristics of the sensor unit 6 (whether or not the sensor unit 6 is capable of outputting an accurate value at that distance).

In consideration of the sensitivity characteristics of the sensor unit 6, the first division line L1 is set, for example, at a boundary between a region including a measured distance ds output from the sensor unit 6 upon receiving a radio wave reflected from a reflecting surface that is the wall surface forming the opening T2 (other than the boundary surface F and the bottom surface T11), and a region including a measured distance ds output from the sensor unit 6 upon receiving a radio wave reflected from a reflecting surface that is the boundary surface F or the bottom surface T11, other than the wall surface forming the opening T2. In the present embodiment, the first division line L1 is set at the boundary surface F (liquid surface) of the contained material C at the time when the remaining amount Ra of the contained material C is estimated (considered) to be full, in consideration of the sensitivity characteristics of the sensor unit 6. In the example illustrated in Fig. 3, the first division line L1 is set at a position away from the lower end of the opening T2 only by a predetermined distance. Note that the first division line L1 may be set at the lower end of the opening T2.

### [Second Threshold]

The second threshold d2 is set based on the distance (actual distance) between a second division line L2 and the sensor unit 6 in advance. In the present embodiment, the second division line L2 is set in advance at the bottom surface T11 of the container T by the operator or the like. That is, as the second threshold d2, a value equal to the actual distance between the sensor unit 6 and the bottom surface T11 (hereinafter referred to as a "bottom-surface distance dt") is set.

### [Allowable Range]

In the present embodiment, respective allowable ranges (a first allowable range R1 and a second allowable range R2) are set for the first division line L1 and the second division line L2. Note that the upper limit (a value greater than the first division line L1) of the first allowable range R1 is an example of a first allowable threshold, and the upper limit (a value greater than the second division line L2) of the second allowable range R2 is an example of a second allowable threshold. The second allowable range R2 is an example of an allowable range.

The first allowable range R1 and the second allowable range R2 are set for the first division line L1 and the second division line L2, for example, such that the first allowable range R1 and the second allowable range R2 extend across the first division line L1 and the second division line L2, respectively. More specifically, each of the first allowable range R1 and the second allowable range R2 is set to a range (corresponding to several centimeters to several tens of centimeters) that includes values on both the upper side Z2 (the sensor-unit-6 side) and the lower side Z1 (the bottom-surface-T11 side) relative to a corresponding one of the first division line L1 and the second division line L2. Values to be set as the first allowable range R1 and the second allowable range R2 are determined in advance by the operator or the like.

Since the first allowable range R1 and the second allowable range R2 are set, individual variations in characteristics of the sensor unit 6 (a sensor IC) can be absorbed, thereby allowing a margin in estimating the remaining amount Ra. For example, by setting the first allowable range R1, variations in the sensitivity characteristics of the sensor unit 6 can be compensated for. In addition, for example, by setting the second allowable range R2, the remaining amount Ra of the contained material C can be estimated (considered) to be empty when the remaining amount Ra of the contained material C is extremely small.

Note that the second allowable range R2 is set to a value (a value that causes third measurement result information C23 (described later) to be included in the measurement result information C2) that the measured distance ds indicated by the measurement result information C2 output from the sensor unit 6 exceeds when the actual remaining amount Ra of the contained material C is full.

With reference to Equation (1) and Equation (2), the following describes an example of a method for determining a value set as the second allowable range R2.

As a premise, the measured distance ds output from the sensor unit 6 is proportional to the square root of the relative permittivity εr of the medium (the contained material C) through which the radio wave passes, relative to an actual distance dm through the medium (the contained material C). Accordingly, the measured distance ds is obtained by Equation (1) as follows. $ds = dm \times √ εr$ Equation (1)

A measured distance ds output from the sensor unit 6 as the distance between the sensor unit 6 and the bottom surface T11 can be obtained by Equation (2), which represents the sum of a contained-material distance df (see Fig. 3) between the sensor unit 6 and the contained material C, and a depth dc1 of the contained material C (a value considering the relative permittivity εr; see Fig. 3). $ds = df + dc 1$ Equation (2)

For example, in a case where the remaining amount Ra of the contained material C is estimated (considered) to be full when the bottom-surface distance dt (the value indicated by container specific information C3) indicating the actual distance between the sensor unit 6 and the bottom surface T11 is "100 cm," the relative permittivity εr of air is "1" (approximately 1), and the actual distance (the contained-material distance df) between the sensor unit 6 and the contained material C having a relative permittivity εr of "2" is 10 cm or less, the measured distance ds output from the sensor unit 6 as the distance between the sensor unit 6 and the bottom surface T11 is obtained by substituting the respective values into Equation (2) as follows. $ds = 10 \times √ 1 + \left(100-10\right) \times √ 2 ≒ 137$

Accordingly, in order that the remaining amount Ra of the contained material C is estimated to be full when the actual distance (the contained-material distance df) between the sensor unit 6 and the contained material C having a relative permittivity εr of "2" is 10 cm or less, the lower-side-Z1 value relative to the second division line L2 in the second allowable range R2 only needs to be set to a value less than 37 cm (137 cm - 100 cm).

In a case where the remaining amount Ra of the contained material C is estimated to be empty when the depth dc (the actual distance) of the contained material C is 5 cm or less (the depth dc1 in consideration of the relative permittivity is 5 × √2 in accordance with Equation (1)), for example, the measured distance ds can be obtained by substituting the respective values into Equation (2) as follows. $ds = \left(100-5\right) \times √ 1 + 5 \times √ 2 ≒ 102$

Accordingly, in order that the remaining amount Ra is estimated to be empty when the depth dc (the actual distance) of the contained material C is 5 cm or less, the lower-side-Z1 value relative to the second division line L2 in the second allowable range R2 may be set to a value greater than 2 cm.

From the foregoing, in a case where the allowable range on the lower side Z1 relative to the second division line L2 is set to a value greater than 2 cm and smaller than 37 cm, the remaining amount Ra of the contained material C can be estimated to be full when the actual distance between the contained material C and the sensor unit 6 is 10 cm or less, and the remaining amount Ra of the contained material C can be accurately estimated to be empty when the depth dc (the actual distance) of the contained material C is 5 cm or less. Note that, when the value to be set as the second allowable range R2 on the lower side Z1 relative to the second division line L2 is increased, the actual remaining amount Ra of the contained material C that is estimated to be empty can be increased.

Note that, in the following description, as illustrated in Figs. 6A to 6C, a "first region A1" represents a region equal to or lower than the upper limit of the first allowable range R1, a "second region A2" represents a region greater than the upper limit of the first allowable range R1 and equal to or less than the upper limit of the second allowable range R2, and a "third region A3" represents a region greater than the upper limit of the second allowable range R2. Among pieces of measurement result information C2 output from the sensor unit 6, "first measurement result information C21" represents measurement result information C2 included in the first region A1, "second measurement result information C22" represents measurement result information C2 included in the second region A2, and "third measurement result information C23" represents measurement result information C2 included in the third region A3.

The sensor unit 6 outputs measurement result information C2 including at least one of the first measurement result information C21, the second measurement result information C22, and the third measurement result information C23. The first measurement result information C21 can be output from the sensor unit 6 that has received a radio wave reflected from a reflecting surface that is the wall surface forming the opening T2, for example. That is, a measured distance ds indicated by the first measurement result information C21 appearing in the first region A1 may not indicate an accurate value as the distance between the sensor unit 6 and the contained material C and is not suitable for estimation of the remaining amount Ra of the contained material C. Accordingly, the measured distance ds indicated by the first measurement result information C21 (the measured distance ds included in the first region A1) is not used for estimation of the remaining amount Ra of the contained material C. This makes it possible to suppress a decrease in the accuracy of the sensor unit 6.

The second measurement result information C22 can be output from the sensor unit 6 that has received a radio wave reflected from a reflecting surface that is the boundary surface F (liquid surface) or the bottom surface T11 of the container T, for example. That is, the second measurement result information C22 appearing in the second region A2 indicates the distance between the sensor unit 6 and the contained material C or the bottom surface T11 and is suitable for estimation of the remaining amount Ra of the contained material C. Accordingly, a measured distance ds indicated by the second measurement result information C22 (the measured distance ds included in the second region A2) is used for estimation of the remaining amount Ra of the contained material C.

The third measurement result information C23 is measurement result information C2 output as a result of a change in the propagation velocity of the radio wave (a change in the measured distance) caused by the presence of the remaining contained material C. More specifically, in a case where the contained material C having a relative permittivity εr greater than that of air remains in the container T, the third measurement result information C23 can be output from the sensor unit 6 that has received a radio wave reflected from a reflecting surface that is the bottom surface T11 of the container T.

For example, in a case where the radio wave is propagated with the contained material C being in a full state, the radio wave is propagated only through the contained material C (without passing through air). In contrast, in a case where the radio wave is propagated with the contained material C being "0" (in an empty state), the radio wave is propagated only through air (without passing through the contained material C). As described above, the contained material C has a relative permittivity εr of "2," which is greater than the relative permittivity εr of air, "1." Accordingly, the measured distance ds (apparent distance) to the bottom surface T11 of the container T, indicated by the measurement result information C2 output from the sensor unit 6, is greater than the bottom-surface distance dt, which is the actual distance, and a value greater than the second threshold d2 (that is, the third measurement result information C23) is output.

More specifically, the bottom-surface distance dt between the sensor unit 6 and the bottom surface T11 can be theoretically obtained by the sum of the distance from the sensor unit 6 to the boundary surface F of the contained material C and the depth dc of the contained material C. However, in a case where the contained material C having a relative permittivity εr greater than "1" remains as described above, the measured distance ds indicated by the measurement result information C2 output from the sensor unit 6 indicates a value greater than the actual bottom-surface distance dt. That is, a depth dc1 (the measured distance ds) of the contained material C, obtained based on the measurement result information C2 output from the sensor unit 6, has a value greater than the actual depth dc of the contained material C. It is considered that there is only one second measurement result information C22 unless a plurality of media different in the relative permittivity εr is mixed as the contained material C. Accordingly, it is assumed that the third measurement result information C23 indicating a distance (value) greater than the second measurement result information C22 indicates the distance between the sensor unit 6 and a reflecting surface (the bottom surface T11) when the reflecting surface is the bottom surface T11. That is, the measured distance ds indicated by the third measurement result information C23 appearing in the third region A3 does not indicate the distance between the sensor unit 6 and the contained material C and therefore is not suitable for estimation of the remaining amount Ra (specific value) of the contained material C. Accordingly, the measured distance ds indicated by the third measurement result information C23 (the measured distance ds included in the third region A3) is not used for estimation of the remaining amount Ra (specific value) of the contained material C. Note that it is also assumed that the third measurement result information C23 may not be output due to factors such as sensitivity characteristics (i.e., the distance-measurement limit) of the sensor unit 6 (the sensor IC), the size of the container T, and the relative permittivity εr of the contained material C. However, since the third measurement result information C23 is not used for estimation of the remaining amount Ra of the contained material C, there is no effect on the accuracy of estimating the remaining amount Ra of the contained material C.

### [Memory Unit]

The memory unit 7 illustrated in Figs. 4, 5 includes a nonvolatile semiconductor memory and the like. The memory unit 7 is configured to store the container specific information C3 based on the specifications of the container T on which remaining amount estimation device 100 is mounted, and estimation-related information C4 associated with estimation of the remaining amount Ra of the contained material C stored in the container T. Note that the memory unit 7 also stores information indicating the first threshold d1, the second threshold d2, the first allowable range R1, and the second allowable range R2.

### [Container Specific Information]

The container specific information C3 is information concerning the specifications (size) specific to the container T. The container specific information C3 includes information indicating the bottom-surface distance dt between the sensor unit 6 fixed to the lid T3 and the bottom surface T11 of the container T. In the present embodiment, the container specific information C3 is obtained by measurement performed by the sensor unit 6 mounted on the lid T3 in a state where no material C is contained in the container T (that is, the remaining amount Ra of the contained material C is empty). However, the container specific information C3 may be set based on the specifications (catalog data) of the container T or may be set to a value actually measured using a measuring tape or the like.

### [Estimation-related Information]

The estimation-related information C4 is information indicating the relationship between the measurement result information C2 output from the sensor unit 6 and the remaining amount Ra of the contained material C (see Fig. 7). Fig. 7 is a graph illustrating an example of the relationship between the depth dc of the contained material C and the remaining amount Ra of the contained material C. In Fig. 7, the horizontal axis represents the depth dc of the contained material C, and the vertical axis represents the remaining amount Ra of the contained material C. Note that the depth dc of the contained material C represents the actual distance between the boundary surface F of the contained material C (the sensor-unit-6 side (the upper side Z2) in Fig. 3) and the bottom surface T11 of the container T.

### [Remaining Amount Estimation Unit]

The remaining amount estimation unit 8 includes a processor like a CPU (Central Processing Unit). The remaining amount estimation unit 8 estimates the remaining amount Ra of the contained material C based on the measurement result information C2 output from the sensor unit 6 and information stored in the memory unit 7 (the container specific information C3 and the estimation-related information C4).

In the present embodiment, the remaining amount estimation unit 8 estimates the remaining amount Ra of the contained material C by utilizing the fact that the propagation velocity of radio waves (and thus the measured distance) changes due to the relative permittivity εr of the contained material C. More specifically, as described above, the remaining amount Ra of the contained material C is estimated by utilizing the fact that the measured distance ds output from the sensor unit 6 that receives a reflected wave reflected from the bottom surface T11 of the container T becomes greater than the actual bottom-surface distance dt (the actual distance between the sensor unit 6 and the bottom surface T11).

More specifically, as illustrated in Figs. 6A to 6C, the remaining amount estimation unit 8 estimates the remaining amount Ra without using the measured distance ds included in the first region A1 (the measured distance ds equal to or less than the upper limit of the first allowable range R1), among the measured distances ds output from the sensor unit 6. In the present embodiment, the remaining amount estimation unit 8 estimates the remaining amount Ra of the contained material C by determining whether or not each measured distance ds is included in the second region A2 (a region greater than the upper limit of the first allowable range R1 and equal to or less than the upper limit of the second allowable range R2). Note that, when the measured distance ds indicated by the measurement result information C2 (the second measurement result information C22) is equal to or less than the first allowable range R1, the remaining amount estimation unit 8 may determine that the remaining amount Ra of the contained material C is full.

In response to determining that no measured distance ds is included in the second region A2, the remaining amount estimation unit 8 determines whether or not the measured distance ds is greater than the upper limit of the second allowable range R2. In response to determining that the measured distance ds is greater than the upper limit of the second allowable range R2, the remaining amount estimation unit 8 estimates that the remaining amount Ra of the contained material C is full.

In response to determining that the measured distance ds output from the sensor unit 6 is included in the second region A2 (the measured distance ds is greater than the upper limit of the first allowable range R1 and equal to or less than the upper limit of the second allowable range R2), the remaining amount estimation unit 8 determines whether or not the measured distance ds is included in the second allowable range R2 (equal to or greater than the lower limit of the second allowable range R2 and equal to or less than the upper limit thereof). In response to determining that the measured distance ds is included in the second allowable range R2 (that is, the measured distance ds is a value close to the distance between the sensor unit 6 and the bottom surface T11), the remaining amount estimation unit 8 estimates that the remaining amount Ra of the contained material C is "0" (empty). In the meantime, in response to determining that the measured distance ds is not included in the second allowable range R2 (that is, the measured distance ds is a value far from the distance between the sensor unit 6 and the bottom surface T11), the remaining amount Ra of the contained material C is obtained by calculation based on the measured distance ds.

### [Calculation of Remaining Amount]

In a case where the remaining amount Ra of the contained material C is full, for example, the remaining amount estimation unit 8 outputs remaining-amount result information C5 indicating a predetermined value as the remaining amount Ra (the volume of the contained material C in the case of estimating the remaining amount Ra to be full). In a case where the remaining amount Ra is empty, the remaining amount estimation unit 8 outputs remaining-amount result information C5 indicating "0." In a case where the remaining amount Ra of the contained material C is neither full nor empty, the remaining amount estimation unit 8 calculates the remaining amount Ra of the contained material C and outputs remaining-amount result information C5 indicating the calculation result. Note that, in the following description, the process of calculating the remaining amount Ra may be referred to as a "remaining amount estimation process."

### [Communication Unit]

The communication unit 9 is capable of exchanging data representing the remaining-amount result information C5 output from the remaining amount estimation unit 8. The communication unit 9 includes an antenna (not illustrated). The antenna can be, for example, an antenna element mounted on the substrate 3, a pattern antenna formed on the surface of the substrate 3, or an antenna incorporated in a communication IC mounted on the substrate 3, or may be connected to an antenna element disposed in the storage space 1S via a communication wire or the like.

The communication unit 9 includes a first communication unit 91 and a second communication unit 92 having different communication ranges (communication standards). Note that the container specific information C3 to be stored in the memory unit 7 can be input into the memory unit 7 of the remaining amount estimation device 100 via the first communication unit 91 or the second communication unit 92.

The first communication unit 91 is capable of performing communication compliant with a long-range wireless standard. The first communication unit 91 includes a communication device compliant with the long-range wireless standard. In the present embodiment, the first communication unit 91 includes a communication device compliant with LPWA (Low Power Wide Area). Note that the first communication unit 91 may be a communication device compliant with 5G, LTE, or the like.

The first communication unit 91 is capable of transmitting the remaining-amount result information C5 estimated by the remaining amount estimation unit 8 to the first external device 201 described with reference to Fig. 1. That is, the first external device 201 is capable of receiving the remaining-amount result information C5 output from the remaining amount estimation unit 8. The first external device 201 includes a first external communication unit (not illustrated) capable of performing communication compliant with the same communication standard as the first communication unit 91 and is capable of communicating with the first communication unit 91 in conformity with the long-range wireless standard. Hereby, the remaining amount Ra of the container T, output from the remaining amount estimation device 100, can be monitored remotely. By monitoring the remaining amount Ra, the container T can be replenished with the material C at an appropriate timing by a replenishment service system for the material C.

The second communication unit 92 is capable of performing communication compliant with a short-range wireless standard. The second communication unit 92 includes a communication device compliant with the short-range wireless standard. In the present embodiment, the second communication unit 92 includes a communication device compliant with BLE (Bluetooth Low Energy). Note that the second communication unit 92 may be a device compliant with Bluetooth (registered trademark) other than BLE, Wi-Fi, Private LoRa, Z-Wave, Zig Bee (registered trademark), Thread, Matter, and the like.

The second communication unit 92 receives control data for the remaining amount estimation device 100 (the control unit 5) from the second external device 202 described with reference to Fig. 1. That is, the second external device 202 is capable of transmitting control data for the remaining amount estimation device 100. The second external device 202 includes a second external communication unit (not illustrated) that is capable of performing communication compliant with the same communication standard as the second communication unit 92 and is capable of communicating with the second communication unit 92 in conformity with the short-range wireless standard (e.g., P-to-P wireless communication with the remaining amount estimation device 100).

### [Remaining Amount Estimation Process]

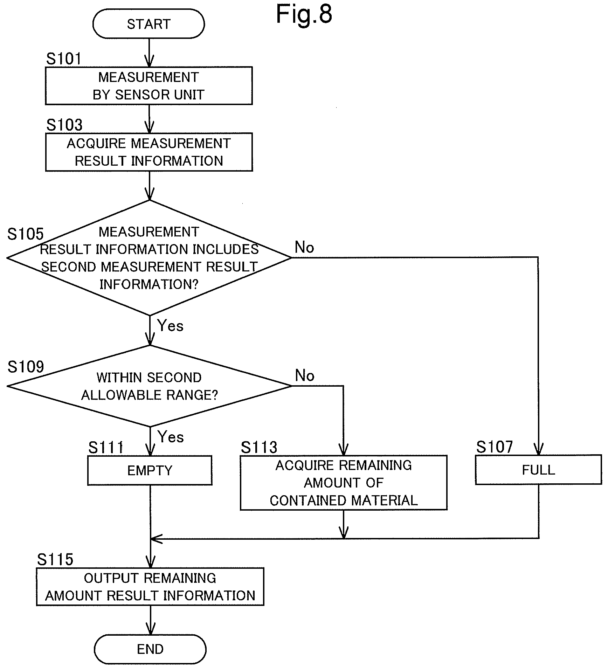

With reference to Fig. 8, the following describes the remaining amount estimation process (a remaining amount estimation method) performed by the remaining amount estimation unit 8. Fig. 8 is a flowchart illustrating the remaining amount estimation process. The remaining amount estimation process is performed at a predetermined (scheduled) frequency (e.g., at one-hour intervals), for example. Note that the remaining amount estimation process may be performed in response to an instruction from an operator who estimates the remaining amount Ra of the contained material C.

When execution is instructed at a predetermined timing or by the operator, as illustrated in Fig. 8, the sensor unit 6 measures a distance to the reflecting surface by transmitting radio waves from the transmitting section, receives the radio waves, and outputs measurement result information C2 (step S101). Upon receiving the measurement result information C2 from the sensor unit 6 (step S103), the remaining amount estimation unit 8 determines whether or not the measurement result information C2 includes second measurement result information C22 other than first measurement result information C21 (step S105). That is, the remaining amount estimation unit 8 determines whether or not the measured distance ds indicated by the measurement result information C2 is greater than the upper limit of the first allowable range R1 and equal to or less than the upper limit of the second allowable range R2.

In response to determining that the measurement result information C2 does not include the second measurement result information C22 (the measured distance ds is equal to or less than the first allowable range R1 or is greater than the upper limit of the second allowable range R2) (step S105: No), the remaining amount estimation unit 8 estimates that the remaining amount Ra of the contained material C is full (step S107), and the process proceeds to step S115.

In the meantime, in response to determining that the measurement result information C2 includes the second measurement result information C22 other than the first measurement result information C21 (the measured distance ds is greater than the first allowable range R1 and equal to or less than the upper limit of the second allowable range R2) (step S105: Yes), the remaining amount estimation unit 8 determines whether or not the measured distance ds is included in the second allowable range R2 (that is, whether or not the measured distance ds is equal to or greater than the lower limit of the second allowable range R2) (step S109).

In response to determining that the measured distance ds is included in the second allowable range R2 (step S109: Yes), the remaining amount estimation unit 8 estimates that the remaining amount Ra is empty (the remaining amount Ra is "0") (step S111), and the process proceeds to step S115.

In the meantime, in response to the remaining amount estimation unit 8 determining that the measured distance ds is not included in the second allowable range R2 (step S109: No), the remaining amount estimation unit 8 obtains the remaining amount Ra of the contained material C by calculation based on the measurement result information C2 estimated by the sensor unit 6 and the measurement result information C2 stored in the memory unit 7 (step S113), and the process proceeds to step S115.

For example, in a case where a value indicated by the container specific information C3 (the bottom-surface distance dt between the sensor unit 6 and the bottom surface T11) is "100 cm," and the contained-material distance df between the sensor unit 6 and the contained material C having a relative permittivity εr of "2" is 50 cm, the depth dc (actual distance) of the contained material C is obtained as 50 cm, calculated as 100 - 50 = 50 cm. The remaining amount estimation unit 8 calculates the remaining amount Ra of the contained material C based on the obtained depth dc (actual distance) of the contained material C and the estimation-related information C4. For example, as illustrated in the graph of Fig. 7, when the depth dc (actual distance) of the contained material C is "50 cm," the remaining amount estimation unit 8 determines that the remaining amount Ra of the contained material C is "100 L." Note that the remaining amount estimation unit 8 may calculate the remaining amount Ra using a value within the second allowable range R2 (a value shifted toward the lower side Z1 or the upper side Z2).

Subsequently, in step S115, the remaining amount estimation unit 8 outputs remaining-amount result information C5 indicating the remaining amount Ra of the contained material C. In the present embodiment, the remaining-amount result information C5 is transmitted to the first external device 201 via the first communication unit 91. Hereby, the remaining amount estimation process is finished.

### [Effects of Embodiment]

The remaining amount estimation device 100 configured as described above achieves the following effects.
(1) In the above embodiment, the measured distance ds equal to or less than the upper limit of the first allowable range R1 set in advance in accordance with the specifications of the sensor unit 6 (a region where accurate measurement cannot be performed due to sensitivity characteristics of the sensor unit 6 or the like) and the specifications of the container T (a region where accurate measurement cannot be performed due to the specifications such as the size of the container T (particularly, the opening T2) or the shape of the container T (particularly, the opening T2)) is not used for estimation of the remaining amount Ra. Accordingly, the remaining amount Ra of the contained material C can be estimated more accurately.
(2) In a case of the remaining amount Ra of the contained material C having a relative permittivity εr greater than that of air, the measured distance ds to the bottom surface T11, indicated by the measurement result information C2 output from the sensor unit 6, is greater than the actual bottom-surface distance dt, and a value greater than the upper limit of the second allowable range R2 is output as the measured distance ds. By utilizing such a phenomenon, it is possible to determine that the remaining amount Ra of the contained material C is full when the measured distance ds is greater than the upper limit of the second allowable range R2 set in advance based on the bottom-surface distance dt, thereby making it possible to more accurately estimate the remaining amount Ra of the contained material C.
(3) Even in a case where the reflected wave reflected from the bottom surface T11 is attenuated due to the size of the contained material C or the type of the contained material C and is not received by the sensor unit 6 or not detected by the sensor unit 6 (the reflected wave is determined not to be received), the remaining amount Ra of the contained material C can be estimated to be full, thereby making it possible to more accurately estimate the remaining amount Ra of the contained material C.
(4) In the above embodiment, the remaining amount Ra can be estimated to be empty by determining whether or not the measured distance ds is included in the second allowable range R2 set in advance based on the bottom-surface distance dt indicating the distance between the sensor unit 6 and the bottom surface T11 of the container T, thereby making it possible to more accurately estimate the remaining amount Ra of the contained material C. Besides, by adjusting the second allowable range R2, the remaining amount Ra can be estimated (considered) to be empty when the remaining amount Ra is very small. Alternatively, by adjusting the first allowable range R1, even when a margin remains relative to the storable capacity, the remaining amount Ra can be estimated (considered) to be full.
(5) In the above embodiment, in a case where the contained material C is neither full nor empty, the remaining amount Ra of the contained material C is obtained by calculation, thereby making it possible to more accurately estimate the remaining amount Ra of the contained material C.
(6) In the above embodiment, a value obtained by actual measurement performed by the sensor unit 6 mounted on the container T can be set as the bottom-surface distance dt, thereby making it possible to more accurately estimate the remaining amount Ra of the contained material C. In addition, the second measurement result information C22 and the third measurement result information C23 can be distinguished from each other.
(7) In the above embodiment, the bottom-surface distance dt can be set based on the specifications (catalog data or the like) of the container T, and therefore, the work (command generation) required to mount the sensor unit 6 on the container T and acquire (measure) the bottom-surface distance dt is not required, thereby making it possible to avoid complication of the work.
(8) In the above embodiment, the work (command generation) required to perform communication to acquire the container specific information C3 from an external device that stores the container specific information C3 (e.g., the first external device 201) is not required, for example, thereby making it possible to improve the responsiveness of the sensor unit 6.
(9) In the above embodiment, the work (command generation) required to mount the sensor unit 6 on the container T and acquire (measure) the bottom-surface distance dt is not required, for example, thereby making it possible to avoid complication of the work. Besides, it is not necessary to disassemble the remaining amount estimation device 100 in any of the stages such as the manufacturing process of the remaining amount estimation device 100, at the time of shipment, after shipment, or after mounting on the container T, and the memory unit 7 can store the container specific information C3 through the communication unit 9.
(10) In the above embodiment, it is possible to estimate the remaining amount Ra of various organic materials as the contained material C. Since millimeter waves are absorbed by water and water vapor, millimeter waves that are not reflected at the water surface and instead penetrate into the water are absorbed by the water. Accordingly, in a case where the sensor unit 6 is a millimeter wave sensor, the sensor unit 6 is unable to receive a reflected wave reflected from the bottom surface T11 as a reflecting surface and therefore cannot output the measured distance ds. Besides, oxygen absorbs millimeter waves at around 60 GHz, and in a case where the frequency of the radio waves of the millimeter wave sensor used is around 60 GHz, the sensor unit 6 is affected in the same manner as water and water vapor. However, if the contained material C is an organic material, the sensor unit 6 can output the measured distance ds.

### [Other Embodiments]

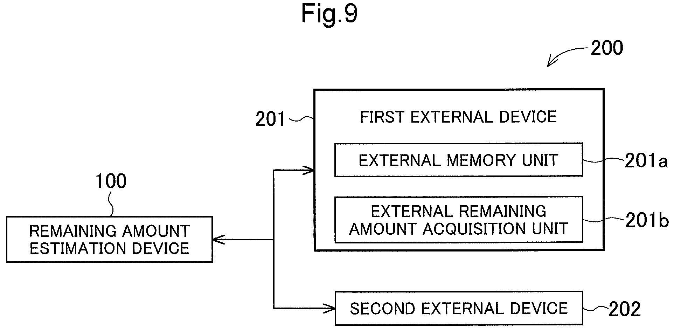

(1) In the above embodiment, the remaining amount estimation device 100 included the control unit 5, the memory unit 7, the remaining amount estimation unit 8, and the communication unit 9. However, the memory unit 7 and the remaining amount estimation unit 8 may be provided for a device different from the remaining amount estimation device 100 (for example, as illustrated in Fig. 9, the first external device 201, which is different from the remaining amount estimation device 100, among devices included in the remaining amount estimation system). The first external device 201 may include an external memory unit 201a capable of storing the container specific information C3, and an external remaining amount estimation unit 201b capable of estimating the remaining amount Ra. Note that the memory unit 7 and the remaining amount estimation unit 8 may be provided in both the remaining amount estimation device 100 and the first external device 201. That is, the housing 1 included in the remaining amount estimation device 100 only needs to accommodate at least the lens unit 2, the substrate 3, the sensor unit 6, and the communication unit 9, and the power supply unit 4, the control unit 5, the memory unit 7, and the remaining amount estimation unit 8 may be accommodated in a housing different from the housing 1. Hereby, the configuration of the remaining amount estimation device 100 can be simplified. As a result, it is possible to reduce the cost required for the remaining amount estimation device 100.
(2) The above embodiment has described a case where the housing 1 is configured as a single unit. However, the housing 1 may include a plurality of divided bodies. The substrate 3 is also not limited to a single substrate and may include a plurality of substrates.
(3) The above embodiment has described a case where a sealing material such as adhesive or grease is applied to a gap between the lid T3 and the housing 1, so that the storage space 1S is made watertight. However, the configuration for making the storage space 1S watertight is not particularly limited. The storage space 1S may be watertight by disposing an O-ring between the lid T3 and the housing 1, for example. Alternatively, the storage space 1S may be made watertight by ultrasonically welding the lid T3 to the housing 1. Also, a member that is permeable to gas and impermeable to liquid may be used as part of the lid T3. The housing 1 may be dustproof or explosion-proof. That is, the housing 1 may be made waterproof, dustproof, or explosion-proof by injecting a sealing material such as a potting material.
(4) A waterproof connector (not illustrated) may be incorporated into the housing 1 described in the above embodiment. Hereby, the antenna can be disposed outside the housing 1 by connecting the antenna to the connector. Alternatively, the battery portion 42 can be disposed outside the housing 1 by connecting the battery portion 42 to the connector. This allows components that occupy a large volume to be disposed outside the housing 1. That is, by incorporating a waterproof connector into the housing 1, it is possible to reduce the size of the remaining amount estimation device 100 while the watertightness of the storage space 1S of the housing 1 is maintained.
(5) The above embodiment has described a case where the contained material C is kerosene. The contained material C is not limited to kerosene and may be, for example, an organic material (organic solvent), provided that its relative permittivity εr is equal to or greater than that of air, i.e., "approximately 1" (preferably "2" or more) and the material can be contained in the container T. The contained material C is not limited to a liquid and may be a solid or a mixture of a liquid and a solid. However, it is preferable that the contained material C do not include air. Note that the container T is changed appropriately depending on the material C to be contained.
(6) In the above embodiment, the first allowable range R1 is set to extend across the first division line L1, but the first allowable range R1 may not be set to extend across the first division line L1 (may be set only on either the upper side Z2 (the sensor-unit-6 side) or the lower side Z1 (the bottom-surface-T11 side)). This also applies to the second allowable range R2.
(7) In the above embodiment, the first allowable range R1 is set for the first division line L1, but the first allowable range R1 may not be set. This also applies to the second allowable range R2.

### Industrial Applicability

This disclosure is applicable to a remaining amount estimation system.

### Description of Reference Numerals

6: sensor unit
7: memory unit
8: remaining amount estimation unit
9: communication unit (input unit)
200: remaining amount estimation system
C: material
C2: measurement result information
C3: container specific information
R2: second allowable range (allowable range)
Ra: remaining amount
T: container
T11: bottom surface
ds: measured distance
dt: bottom-surface distance

## Claims

1. A remaining amount estimation system for estimating a remaining amount of a material contained in a container on which the remaining amount estimation system is mounted, the remaining amount estimation system comprising:
a sensor unit configured to measure a distance to the contained material by measuring time from transmission of a radio wave until reception of the radio wave reflected from a surface of the contained material and to output measurement result information indicating at least the measured distance; and
a remaining amount estimation unit configured to estimate the remaining amount based on the measurement result information, but with no use of a measured distance equal to or less than a first allowable threshold set in advance in accordance with specifications of the sensor unit and/or the container, from among measured distances indicated by the measurement result information.

2. The remaining amount estimation system according to claim 1, wherein
the remaining amount estimation unit determines whether or not the measured distance is greater than a second allowable threshold set in advance based on a bottom-surface distance indicating a distance between the sensor unit and a bottom surface of the container, and
in response to determining that the measured distance is greater than the second allowable threshold, the remaining amount estimation unit estimates that the remaining amount of the contained material is full.

3. The remaining amount estimation system according to claim 1, wherein
in response to determining that the measured distance is equal to or less than the first allowable threshold, the remaining amount estimation unit estimates that the remaining amount of the contained material is full.

4. The remaining amount estimation system according to claim 2, wherein
in response to determining that the measured distance is equal to or less than the second allowable threshold, the remaining amount estimation unit determines whether or not the measured distance is within an allowable range set in advance relative to the bottom-surface distance, and
in response to determining that the measured distance is within the allowable range, the remaining amount estimation unit estimates that the remaining amount of the contained material is empty.

5. The remaining amount estimation system according to claim 4, wherein
in response to determining that the measured distance is out of the allowable range, the remaining amount estimation unit estimates the remaining amount based on the measured distance.

6. The remaining amount estimation system according to claim 2, wherein
the bottom-surface distance is the measurement result information acquired by the sensor unit while no material is contained in the container.

7. The remaining amount estimation system according to claim 2, wherein
the bottom-surface distance is container specific information based on the specifications of the container.

8. The remaining amount estimation system according to claim 7, further comprising:
a memory unit capable of storing the container specific information.

9. The remaining amount estimation system according to claim 8, further comprising:
an input unit capable of receiving the container specific information.

10. The remaining amount estimation system according to claim 1 or 2, wherein
the contained material is an organic material.
